# EUROPÄISCHE PATENTSCHRIFT

(11) **EP 0 467 130 B1**
(45) Veröffentlichungstag und Bekanntmachung des Hinweises auf die Patenterteilung: **17.04.1996**
(21) Anmeldenummer: 91110710.0
(22) Anmeldetag: 28.06.1991
(51) Int. Cl.: G05D 23/13, F01P 3/20, F01P 7/16, B60H 1/00

(54) **Thermostatventil mit übergeordnetem Verstellantrieb**
Thermostatic valve with overriding actuator
Soupape thermostatique avec actionneur prioritaire

(30) Priorität: 17.07.1990 DE 4022731
(43) Veröffentlichungstag der Anmeldung: 22.01.1992
(60) Teilanmeldung: 95115655.3
(73) Patentinhaber: Firma J. Eberspächer, D-73730 Esslingen (DE)
(72) Erfinder: Humburg, Michael, Dipl.-Ing., W-7320 Göppingen (DE)
(74) Vertreter: Klunker . Schmitt-Nilson . Hirsch

(56) Entgegenhaltungen:
- EP-A- 0 139 951
- EP-A- 0 235 472
- DE-B- 1 283 058
- DE-U- 8 610 959
- US-A- 3 540 651

## Beschreibung

Gegenstand der Erfindung ist ein Thermostatventil mit zwei Eingängen, einem Ausgang, zwei Endstellungen und einem Ventil-Dehnstoffelement, gekennzeichnet durch zwei übergeordnete, in entgegengesetzte Verstellrichtungen arbeitende, elektrisch aktivierbare Verstellantriebe, mit denen das Thermostatventil unabhängig von der Situation des Ventil-Dehnstoffelements in die zwei Endstellungen bringbar ist.

Aus dem Dokument EP-A-0 139 951 ist ein Thermostatventil mit drei Flüssigkeitsanschlüssen, zwei Endstellungen und einem Ventil-Dehnstoffelement bekannt. Der Verstellung des Ventils durch das Ventil-Dehnstoffelement überlagert ist ein elektrisch aktivierbarer Verstellantrieb. Zwei, in entgegengesetzte Verstellrichtungen arbeitende Verstellantriebe sind nicht vorgesehen.

Durch die Erfindung ist ein Ventil geschaffen, das in seiner Grundfunktion ein Thermostatventil ist (also auf - im wesentlichen - Konstanthaltung der Temperatur der in einem Bereich des Ventils strömenden Flüssigkeit arbeitet), das aber durch zwei übergeordnete, in entgegengesetzte Verstellrichtungen arbeitende Verstellantriebe "übersteuerbar" ist, insbesondere nach Wunsch eines Benutzers.

Es ist besonders hervorzuheben, daß das erfindungsgemäße, vielfältig steuerbare Ventil eine Baueinheit ist, was im Vergleich, beispielsweise zu dem Vorsehen eines reinen Thermostatventils und separaten Auf/Zu-Ventilen, erhebliche Vorteile hinsichtlich Herstellungs- und Montagekosten bietet.

Bevorzugte Ausgestaltungen der Erfindung sind in den abhängigen Ansprüchen angegeben. Die Verstellantriebe lassen sich vorzugsweise durch einen Elektromotor, ein Solenoid bzw. einen Elektromagneten oder ein elektrisch beheizbares Verstellantrieb-Dehnstoffelement verwirklichen. Weitere Möglichkeiten sind technisch vorstellbar.

Das erfindungsgemäße Ventil ist vorzugsweise für den Einbau in den Kühlmittelkreislauf eines Verbrennungsmotors für ein Kraftfahrzeug bestimmt, wobei der Kühlmittelkreislauf den Verbrennungsmotor, einen Kühlmittel/Luft-Wärmetauscher für einen Fahrzeuginnenraum und einen Verbrennungsgas/Kühlmittel-Wärmetauscher eines durch Verbrennung Wärme erzeugenden Heizgeräts miteinander verbindet, wobei der Kühlmittelkreislauf eine an dem Verbrennungsmotor vorbeiführende Bypassleitung und ein Ventil zur Steuerung des Kühlmittelflusses durch die Bypassleitung und den Verbrennungsmotor aufweist. Die vorzugsweise in Frage kommenden Kraftfahrzeuge sind insbesondere Omnibusse, Lastkraftwagen, übliche Personenkraftfahrzeuge (kleiner als Omnibusse), Erdbewegungsmaschinen wie Bulldozer, Wohnmobile, Schiffe. Das Heizgerät wird vorzugsweise mit dem gleichen Brennstoff betrieben wie auch der Verbrennungsmotor, also insbesondere mit Dieselöl, Benzin oder Gas.

Die Erfindung und Ausgestaltungen der Erfindung werden nachfolgend anhand von Ausführungsbeispielen noch näher erläutert. Es zeigt:
- Fig. 1: eine erste Ausführungsform eines Kühlmittelkreislaufs mit schematisiert eingezeichneten Komponenten;
- Fig. 2: ein erfindungsgemäßes Ventil mit zwei Verstellantrieb-Oehnstoffelementen im Längsschnitt;
- Fig. 3: einen Teil eines abgewandelten Ventils mit alternativem Verstellantrieb;
- Fig. 4: einen Teil eines Ventils mit anderem Versiellantrieb;
- Fig. 5: eine zweite Ausführungsform eines Kühlmittelkreislaufs mit schematisiert eingezeichneten Komponenten.

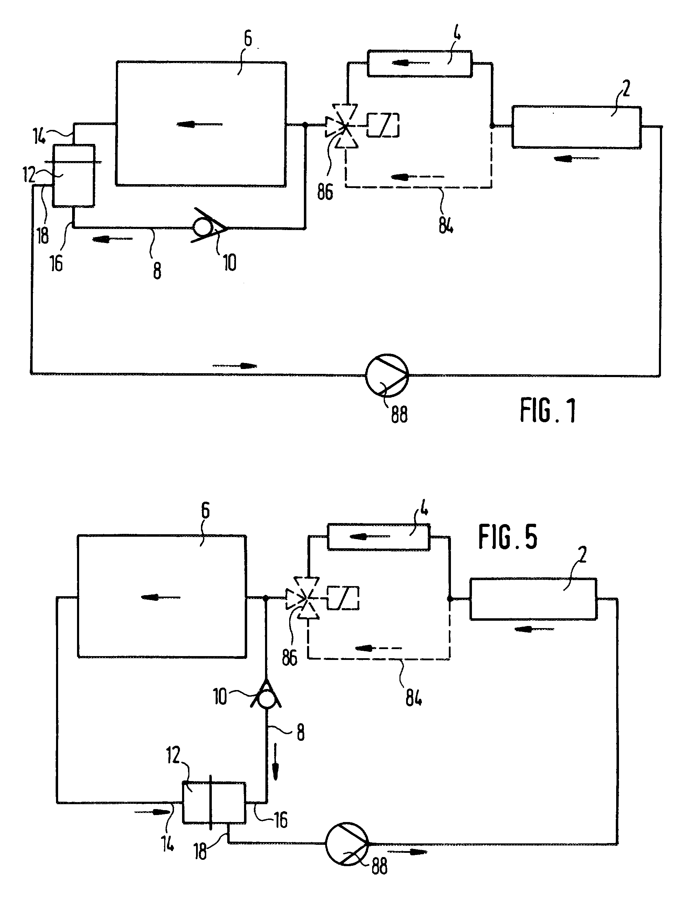

Der in Fig. 1 gezeichnete Kühlmittelkreislauf weist, beginnend mit einem Heizgerät 2, im wesentlichen die folgenden kreislaufleitungsmäßig miteinander verbundenen Komponenten auf: das Heizgerät 2 mit darin vorhandenem Verbrennungsgas/Kühlmittel-Wärmetauscher, einen Kühlmittel/Luft-Wärmetauscher 4 für einen Fahrzeuginnenraum, einen Verbrennungsmotor 6, eine an dem Verbrennungsmotor vorbeiführende Bypassleitung 8 mit darin angeordneten Rückschlagventil 10, sowie ein Ventil 12 an der Wiedereinmündung der Bypassleitung 8 hinter dem Motor 6 in den Kreislauf. Der Kreislauf wird im Betrieb in der soeben abgehandelten Reihenfolge vom Kühlmittel, normalerweise Wasser oder ein Wasser-Glykol-Gemisch, durchströmt.

In gestrichelten Linien sind weitere Komponenten eingezeichnet, die weiter unten genauer beschrieben werden. Diese Komponenten können vorhanden sein, müssen aber nicht.

Wenn das Heizgerät 2 in Betrieb ist, strömt das dort aufgeheizte Kühlmittel zunächst durch den Wärmetauscher 4, wo es einen mehr oder weniger großen Teil seiner Wärme zur Beheizung des Fahrzeuginnenraums abgibt. Die Größe der dortigen Wärmeabgabe richtet sich beispielsweise danach, wie weit ein für die Durchströmung des Wärmetauschers 4 vorgesehenes Ventil geöffnet ist, mit welcher Drehzahl ein dem Wärmetauscher 4 zugeordnetes Gebläse läuft, und welche Temperatur die dem Wärmetauscher 4 zuströmende Luft hat. Nach Verlassen des Wärmetauschers 4 strömt das Kühlmittel durch den Motor 6 und/oder die Bypassleitung 8 nach Maßgabe der Stellung des Ventils 12. Wenn das Ventil 12 in einer ersten Endstellung ist, in der sein erster Eingang 14 (verbunden mit dem Motor 6) geschlossen und sein zweiter Eingang 16 (angeschlossen an die Bypassleitung 8) offen ist, strömt das gesamte Kühlmittel durch die Bypassleitung 8 zum Ausgang 18 des Ventils 12. Der Motor 6 wird nicht vom warmen Kühlmittel durchströmt und erfährt deshalb keine Beheizung. Wenn sich das Ventil in seiner zweiten Endstellung befindet, bei der der Eingang 14 geöffnet und der Eingang 16 geschlossen ist, geht der gesamte Kühlmittelfluß durch den Motor 6. Infolge der dortigen Wärmeabgabe strömt das Kühlmittel kälter zurück zum Heizgerät 2, als wenn es durch die Bypassleitung 8 geströmt wäre. In diesem Fall kann sich die Situation ergeben, daß das Heizgerät 2 den hindurchströmenden Kühlmittelstrom angesichts seiner Heizleistung nicht auf eine für eine intensive Beheizung des Fahrzeuginnenraums an sich optimale Temperatur von etwa 80 bis 95 °C aufheizen kann.

Wenn das Ventil 12, wie im Stand der Technik, ein reines Thermostatventil wäre, würde es beispielsweise die Kühlmitteltemperatur am Ausgang 18 stets auf eine konstante Temperatur bzw. auf eine Temperatur in einem engen Temperaturbereich steuern. Wenn die Kühlmitteltemperatur am Ausgang 18 die Solltemperatur übersteigt, wird der Eingang 14 (weiter) geöffnet. Mehr Kühlmittel strömt durch den Motor 6, und infolgedessen sinkt die Kühlmitteltemperatur am Ausgang 18 wieder. Wenn die Kühlmitteltemperatur am Ausgang 18 unter die Solltemperatur sinkt, wird der Eingang 14 (stärker) geschlossen und der Eingang 16 (stärker) geöffnet; infolgedessen steigt die Temperatur am Ausgang 18, weil die Wärmeabgabe an den Motor 6 abnimmt. Dem Motor 6 wird also immer gerade so viel Wärme zu seiner Erwärmung zugeteilt, wie angesichts der Solltemperatur am Ausgang 18 übrig ist.

Es gibt Situationen, in denen man bewußt eine stärkere Beheizung des Motors 6 oder bewußt eine Ausklammerung des Motors 6 von der Beheizung wünscht, unabhängig von der jeweiligen Stellung des Ventils 12 aufgrund der beschriebenen reinen Thermostatfunktion. Der erstgenannte Fall ist beispielsweise gegeben, wenn man nach einer kalten Nacht eine Aufheizung des Motors 6 für einen leichten Start sichergestellt haben will (und dabei gegebenenfalls eine weniger weitgehende Beheizung des Fahrzeuginnenraums in Kauf nimmt). Die zweitgenannte Situation ist beispielsweise dann gegeben, wenn man über längere Zeit einen gut beheizten Fahrzeuginnenraum haben will, ohne daß der Motor 6 einer Beheizung bedarf, insbesondere weil er erst eine geraume Zeit später gestartet werden soll oder weil die Außentemperaturen nicht so niedrig sind, daß die Startfähigkeit des Motors 6 in Frage gestellt ist. Typisch ist zum Beispiel das Schlafen eines Fahrers in der Fahrerkabine eines Lastkraftwagens oder das Aufhalten von Insassen im Fahrzeuginnenraum für eine längere Zeit ohne laufenden Motor 6.

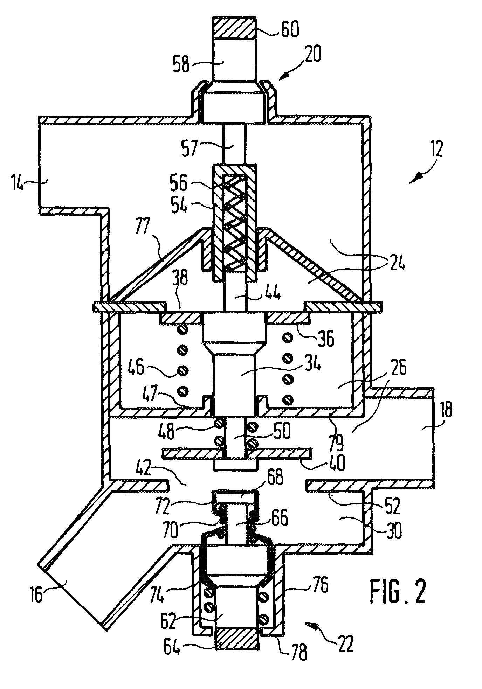

Anhand von Fig. 2 wird jetzt der Aufbau und die Funktion des Ventils 12 detailliert beschrieben. Das Ventil 12 ist bis auf die weiter unten zu beschreibenden Verstellantriebe 20 und 22 und die damit zusammenhängenden Bestandteile ein herkömmlich aufgebautes Thermostatventil. Dieses weist eine obere erste Kammer 24 (die mit dem Eingang 14 versehen ist), eine darunter angeordnete zweite Kammer 26 (die mit dem Ausgang 18 versehen ist) und eine darunter angeordnete dritte Kammer 30 (die mit dem Eingang 16 versehen ist) auf. Hauptsächlich in der zweiten Kammer 26 ist ein Ventil-Dehnstoffelement 34 angeordnet, an dessen Außenteil oben ein erster Ventilteller 36 sitzt, der in der gezeichneten Stellung von unten her gegen den Rand einer zentralen Verbindungsöffnung 38 zwischen der ersten Kammer 24 und der zweiten Kammer 26 anliegt. Unten am Außenteil des Ventil-Dehnstoffelements 34 ist ein zweiter Ventilteller 40 befestigt, der in der gezeichneten Ventilstellung eine zentrale Verbindungsöffnung von der dritten Kammer 30 zu der zweiten Kammer 26 freigibt, aber in der nicht gezeichneten, anderen Endstellung des Ventils 12 von oben her diese Verbindungsöffnung 42 anliegend an deren Rand verschließt. Aus dem Außenteil des Ventil-Dehnstoffelements 34 ragt nach oben in die erste Kammer 24 ein verschiebbarer Schaft oder Kolben 44. Zur erleichterten Beschreibung wird zunächst angenommen, daß der Kolben 44 nach oben stationär festgelegt ist.

Das Ventil-Dehnstoffelement 34 reagiert auf die Kühlmitteltemperatur in der zweiten Kammer 26. Wenn diese Temperatur die durch Wahl des Dehnstoffelements 34 festgelegte Ansprechtemperatur übersteigt, fährt der Kolben 44 aus. Da sich der Kolben 44 nicht nach oben bewegen kann, wird das ganze restliche Dehnstoffelement 34 nach unten gedrückt. Der erste Ventilteller 36 öffnet die Öffnung 38, und der zweite Ventilteller 40 schließt die Öffnung 42. Somit strömt jetzt das Kühlmittel von der ersten Kammer 24 durch die zweite Kammer 26; der Zustrom durch die dritte Kammer 30 ist abgeschlossen. In der gezeichneten Stellung hingegen strömt Kühlmittel von der dritten Kammer 30 in die zweite Kammer 26; Kühlmitteldurchfluß durch die erste Kammer 24 zu der zweiten Kammer 26 ist gesperrt.

Eine erste Feder 46 zwischen der Unterseite des ersten Ventiltellers 36 und einem Widerlager 47 bewirkt ein Zurückfahren des Außenteils des Dehnstoffelements 34 nach oben, wenn die Solltemperatur unterschritten wird. Eine zweite Feder 48 zwischen der Oberseite des zweiten Ventiltellers 40 und einem Absatz am Dehnstoffelement 34 ermöglicht ein Hindurchwandern des unteren Fortsatzes 50 des Dehnstoffelements 34 nach unten durch den zweiten Ventilteller 40, wenn dieser an der Trennwand 52 zwischen der dritten Kammer 28 und der vierten Kammer 30 anliegt.

Bei dem erfindungsgemäßen Ventil 12 stützt sich jedoch der Kolben 44 nicht stationär nach oben ab, sondern ragt in eine Büchse 54, in der eine dritte Feder 56 zwischen der Stirnfläche des Kolbens 44 und dem Büchsengrund angeordnet ist. Ein erstes Verstellantrieb-Dehnstoffelement 58 ist oben im Ventil 12 befestigt. Sein Kolben bzw. Schaft 57 erstreckt sich nach unten und wirkt auf die äußere, obere Stirnfläche der Büchse 54. Das Dehnstoffelement 58 ist mittels eines Kaltleiters 60 elektrisch beheizbar. Wenn das Dehnstoffelement 58 aktiviert wird, drückt sein Kolben 57 die Büchse 54 nach unten, und über die dritte Feder 56 wird das Ventil-Dehnstoffelement 34 in seine weiter vorn beschriebene, untere Stellung gedrückt, in der der erste Ventilteller 36 öffnet und der zweite Ventilteller 40 schließt. Dieses Nach-unten-Drücken erfolgt unabhängig davon, ob beim Ventil-Dehnstoffelement 34 aufgrund der Kühlmitteltemperatur in der dritten Kammer 28 der Kolben 44 ausgefahren ist oder nicht. Wenn er ausgefahren ist, wird die dritte Feder 56 entsprechend komprimiert. Somit dient das erste Verstellantrieb-Dehnstoffelement 58 zum Übersteuern des Ventil-Dehnstoffelements 34 in die untere Endstellung der Ventilteller 36 und 40. Bei aktiviertem Verstellantrieb-Dehnstoffelement 58 ist der Eingang 14 unabhängig von der Temperatur des Kühlmittelflusses geöffnet und der Eingang 16 geschlossen.

Auf der dem ersten Verstellantrieb-Dehnstoffelement 58 gegenüberliegenden Seite des Ventil-Dehnstoffelements 34 ist axial ausgerichtet ein zweites Verstellantrieb-Dehnstoffelement 62 angeordnet, das mittels eines Kaltleiters 64 elektrisch beheizbar ist. Der Schaft bzw. Kolben 66 des Dehnstoffelements 62 ragt nach oben in die dritte Kammer 30. Wenn das Dehnstoffelement 62 aktiviert ist, fährt der Kolben 66 nach oben und drückt von unten gegen den Fortsatz 50 des Ventil-Dehnstoffelements 34. Das Ventil-Dehnstoffelement 34 wird, unabhängig von der Stellung seines Kolbens 44, nach oben verschoben, und die Ventilteller 36 und 40 werden in die gezeichnete, obere Endstellung gebracht. Sofern der Kolben 44 ausgefahren ist, wird dessen Ausfahrweg von der dritten Feder 56 aufgenommen. Das Ventil 12 befindet sich in einem Zustand, in dem unabhängig von der Temperatur des Kühlmittels in der dritten Kammer 28 der Eingang 16 geöffnet und der Eingang 14 geschlossen ist, also der gesamte Kühlmittelstrom durch die Bypassleitung 8 geht.

Zwischen einem verbreiterten Kopf 68 des Kolbens 66 und dem Hauptkörper des zweiten Verstellantrieb-Dehnstoffelementes 62 sitzt eine als Zugfeder ausgebildete, vierte Feder 70. Die vierte Feder 70 wird beim gezeichneten Ausführungsbeispiel oben durch eine Kappe 72 an dem Kopf 68 gehalten und unten durch ein Halteelement 74 am Hauptteil des Dehnstoffelementes 62 gehalten. Es gibt jedoch eine Reihe von äquivalenten Möglichkeiten, die Zugfeder 70 zu halten. Die vierte Feder 70 dient dazu, den Kolben 66 nach unten zurückzuziehen, wenn das Dehnstoffelement 62 deaktiviert ist.

Außerdem erkennt man eine fünfte Feder 76, die zwischen einem Absatz des Hauptteils des Dehnstoffelements 62 und einer unteren Abschlußwand 78 des Ventils 12 als Druckfeder angeordnet ist. Falls das zweite Verstellantrieb-Dehnstoffelement 72 eine Extremdehnung vollführt, die eine Bewegung der Ventilteller 36 und 40 nach oben über die Endstellung hinaus nach sich ziehen würde (Überhub), kann das Dehnstoffelement 62 gegen die Wirkung der fünften Feder 76 eine Ausweichbewegung nach unten vollziehen.

Die weiter vorn beschriebene, als Druckfeder ausgebildete, dritte Feder 56 hat eine fünffache Funktion:
- sie überträgt die Ausfahrbewegung des Kolbens 57 auf das Ventil-Dehnstoffelement 34;
- sie drückt das erste Verstellantrieb-Dehnstoffelement 58 im deaktivierten Zustand zusammen;
- sie kompensiert - wie im letzten Absatz für das zweite Verstellantrieb-Dehnstoffelement 62 beschrieben - eine etwaige, über die Erreichung der unteren Ventilstellung hinausgehende Extremdehnung des ersten Verstellantrieb-Dehnstoffelements 58 (Überhub);
- sie kompensiert eine Ausfahrbewegung des Kolbens 44, wenn das Ventil-Dehnstoffelement 34 durch das zweite Verstellantrieb-Dehnstoffelement 62 in seine obere Position gedrückt ist;
- sie kompensiert eine Ausfahrbewegung des Kolbens 57, wenn sich das erste Verstellantrieb-Dehnstoffelement 58 infolge Beheizung ausdehnt, obwohl das zweite Verstellantrieb-Dehnstoffelement 62 infolge Aktivierung gedehnt ist oder im deaktivierten Zustand sich noch nicht zusammengezogen hat.

Die dritte Feder 56 ist steifer als die erste Feder 46 und die zweite Feder 48, damit das Ausfahren des Kolbens 57 wirklich zu einer Bewegung der Ventilteller 36 und 40 nach unten führt. Die fünfte Feder 76 ist steifer als die dritte Feder 56, damit Ausfahrbewegungen des Kolbens 44 von der dritten Feder aufgenommen werden und die fünfte Feder 76 erst dann komprimiert wird, wenn der beschriebene Überhub des zweiten Verstellantrieb-Dehnstoffelements 62 stattfindet.

Die mit 77 und 79 bezeichneten Bereiche des Ventils sind strebenartig ausgebildet, so daß zwischen den Streben 77 und 79 Kühlmittel frei durch die erste Kammer 24 bzw. die zweite Kammer 26 strömen kann.

Es wird darauf hingewiesen, daß der Bereich um das Ventil-Dehnstoffelement 34, auch oberhalb der Streben 79, stets von Kühlmittel durchströmt wird, um dort kein Strömungstotgebiet entstehen zu lassen und um eine Temperaturerfassung durch das Ventil-Dehnstoffelement 34 sicherzustellen. Bei geöffnetem Ventilteller 36 erfolgt diese Durchströmung von oben von der ersten Kammer 24 her. Bei geöffnetem Ventilteller 40 und geschlossenem Ventilteller 36 erfolgt diese Durchströmung von der dritten Kammer 30 her, weil das Kühlmittel die Zwischenräume zwischen den Streben 79 passiert.

Die Aktivierung und Deaktivierung der Kaltleiter 60 und 64 erfolgt vorzugsweise vom Armaturenbrett des Kraftfahrzeugs aus. Eine Fernsteuerung ist ebenfalls möglich. Ferner ist es möglich, für die Schaltfunktionen eine Zeitschaltuhr vorzusehen.

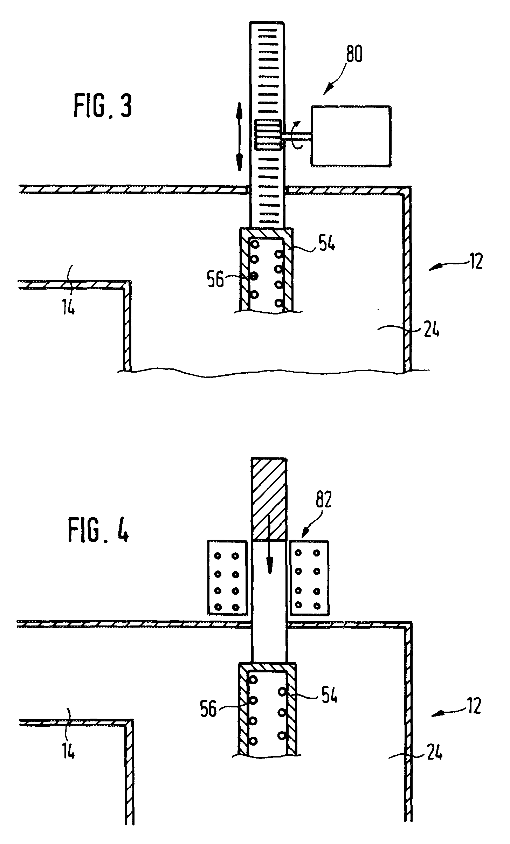

In Fig. 3 ist schematisch veranschaulicht, wie ein Elektromotor 80 statt eines Dehnstoffelements 58 und/oder 62 als Verstellantrieb eingesetzt sein kann. In Fig. 4 ist schematisch veranschaulicht, wie ein Elektromagnet bzw. Solenoid 82 statt eines Dehnstoffelements 58 und/oder 62 eingesetzt sein kann.

Fig. 5 zeigt, daß die Bypassleitung 8, abzweigend vor dem Motor 6 auch auf möglichst kurzem Weg zur Rücklaufleitung vom Motor 6 zum Heizgerät 2 geführt sein und bei der dortigen Einmündung das erfingungsgemäße Ventil 12 angeordnet sein kann. Dies senkt die Wärmeverluste in der Situation, in der der Motor 6 nicht von Kühlmittel durchflossen wird. Diese Ausbildung ist dann besonders vorteilhaft, wenn der Motor 6 relativ weit von dem Wärmetauscher 4 für den Fahrzeuginnenraum entfernt ist, beispielsweise bei einem Omnibus mit Heckmotor.

Bei den in Fig. 1 gestrichelt eingezeichneten Komponenten handelt es sich um eine Bypassleitung 84 für den Wärmetauscher 4, ein dieser Bypassleitung 84 zugeordnetes Regelventil 86, und um eine Zusatzwasserpumpe 88 im Rücklauf von dem Motor 6 zu dem Heizgerät 2. Die Bypassleitung 84 und das Regelventil 86 an der Wiedereinmündung der Bypassleitung 84 ermöglicht eine besonders gute Regelung der Erwärmungstemperatur des Fahrzeuginnenraums. Wenn eine gewünschte Fahrzeuginnenraumtemperatur erreicht ist, steuert das Regelventil 86 derart, daß das im Heizgerät 2 aufgeheizte Kühlmittel an dem Wärmetauscher 4 vorbeiströmt, und umgekehrt. Die Zusatzwasserpumpe 88 ist bei großer Länge des Kühlmittelkreislaufs günstig. Insbesondere bei kleinerer Länge des Kühlmittelkreislaufs ist sie entbehrlich, weil das Heizgerät 2 normalerweise eine integrierte Kühlmittelpumpe aufweist.

## Patentansprüche

1. Thermostatventil mit zwei Eingängen (14,16), einem Ausgang (18), zwei Endstellungen und einem Ventil-Dehnstoffelement (34),
**gekennzeichnet durch**
zwei übergeordnete, in entgegengesetzte Verstellrichtungen arbeitende, elektrisch aktivierbare Verstellantriebe (58;62), mit denen das Thermostatventil (12) unabhängig von der Situation des Ventil-Dehnstoffelements (34) in die zwei Endstellungen bringbar ist.

2. Thermostatventil nach Anspruch 1,
**dadurch gekennzeichnet,**
daß mindestens einer der Verstellantriebe ein elektrisch beheizbares Verstellantrieb-Dehnstoffelement (58;62) aufweist.

3. Thermostatventil nach Anspruch 2,
**dadurch gekennzeichnet,**
daß mindestens bei einem der Verstellantriebe zwischen dem Verstellantrieb-Dehnstoffelement (58;62) und dem Ventil-Dehnstoffelement (34) oder auf der dem Ventil-Dehnstoffelement (34) abgewandten Seite des Verstellantrieb-Dehnstoffelements (58;62) eine Feder (56,76) vorgesehen ist zur Aufnahme von Extremdehnungen des Verstellantrieb-Dehnstoffelements (58;62) und/oder des Ventil-Dehnstoffelements (34).

4. Thermostatventil nach Anspruch 2 oder 3,
**dadurch gekennzeichnet,**
daß mindestens einem der Verstellantrieb-Dehnstoffelemente (58;62) und/oder dem Ventil-Dehnstoffelement (34) eine Feder (56;70) zu dessen Zusammendrücken im deaktivierten Zustand zugeordnet ist.

5. Thermostatventil nach einem der Ansprüche 2 bis 4,
**dadurch gekennzeichnet,**
daß zwischen einem der Verstellantrieb-Dehnstoffelemente (58;62) und dem Ventil-Dehnstoffelement (34) eine Feder (76) vorgesehen ist zur Übertragung der Ausfahrbewegung des Verstellantrieb-Dehnstoffelements (58) auf das Ventil-Dehnstoffelement (34) und zur Aufnahme von Extremdehnungen des Verstellantrieb-Dehnstoffelements (58) und zum Zusammendrücken des Verstellantrieb-Dehnstoffelements (58) im deaktivierten Zustand.

6. Thermostatventil nach Anspruch 1,
**dadurch gekennzeichnet,**
daß mindestens einer der Verstellantriebe einen Elektromotor (80) aufweist.

7. Thermostatventil nach Anspruch 1,
**dadurch gekennzeichnet,**
daß mindestens einer der Verstellantriebe ein Solenoid (82) aufweist.

## Claims

1. A thermostat valve having two inputs (14, 16), an output (18), two end positions and a valve expansion material element (34), characterized by two electrically activatable adjustment drives (58; 62) which are placed above and which operate in opposing directions of adjustment and by means of which the thermostat valve (12) can be brought into the two end positions independently of the situation of the valve expansion material element (34).

2. A thermostat valve according to Claim 1, characterized in that at least one of the adjustment drives has an electrically heatable adjustment drive expansion material element (58; 62).

3. A thermostat valve according to Claim 2, characterized in that in the case of at least one of the adjustment drives, there is provided between the adjustment drive expansion material element (58; 62) and the valve expansion material element (34) or on the side of the adjustment drive expansion material element (58; 62) remote from the valve expansion material element (34) a spring (56, 76) for taking up extreme expansions of the adjustment drive expansion material element (58; 62) and/or of the valve expansion material element (34).

4. A thermostat valve according to Claim 2 or 3, characterized in that a spring (56; 70) is associated with at least one of the adjustment drive expansion material elements (58; 62) and/or the valve expansion material element (34), for the compression thereof in the deactivated state.

5. A thermostat valve according to one of Claims 2 to 4, characterized in that there is provided between one of the adjustment drive expansion material elements (58; 62) and the valve expansion material element (34) a spring (76) for transmitting the extension movement of the adjustment drive expansion material element (58) to the valve expansion material element (34) and for taking up extreme expansions of the adjustment drive expansion material element (58) and for compressing the adjustment drive expansion material element (58) in the deactivated state.

6. A thermostat valve according to Claim 1, characterized in that at least one of the adjustment drives has an electric motor (80).

7. A thermostat valve according to Claim 1, characterized in that at least one of the adjustment drives has a solenoid (82).

## Revendications

1. Soupape thermostatique possédant deux entrées (14, 16), une sortie (18), deux positions extrêmes et un élément de soupape à substance dilatable (34), **caractérisée par**
deux actionneurs (58; 62) prioritaires, activables électriquement et agissant dans des sens de positionnement opposés, par lesquels la soupape thermostatique (12) peut être amenée indépendamment de la situation de l'élément de soupape à substance dilatable (34) aux deux positions extrêmes.

2. Soupape thermostatique selon la revendication 1, **caractérisée en ce que**
au moins l'un des actionneurs comporte un élément d'actionnement à substance dilatable (58; 62) pouvant être chauffé électriquement.

3. Soupape thermostatique selon la revendication 2, **caractérisée en ce que**
sur l'un au moins des actionneurs, on a prévu, entre l'élément d'actionnement à substance dilatable (58; 62) et l'élément de soupape à substance dilatable (34), ou sur le côté éloigné de cet élément de soupape (34) de l'élément d'actionnement à substance dilatable (58; 62), un ressort (56, 76) pour absorber des dilatations extrêmes de l'élément d'actionnement à substance dilatable (58; 62) et/ou de l'élément de soupape à substance dilatable (34).

4. Soupape thermostatique selon la revendication 2 ou 3, **caractérisée en ce que**
à l'un au moins des éléments d'actionnement à substance dilatable (58; 62) et/ou à l'élément de soupape à substance dilatable (34), on a coordonné un ressort (56; 70) pour la compression de cet élément à l'état désactivé.

5. Soupape thermostatique selon une des revendications 2 à 4, **caractérisée en ce que**
entre l'un des éléments d'actionnement à substance dilatable (58; 62) et l'élément de soupape à substance dilatable (34), on a prévu un ressort (76) pour transmettre le mouvement d'extension de l'élément d'actionnement à substance dilatable (58) à l'élément de soupape à substance dilatable (34), pour absorber des dilatations extrêmes de l'élément d'actionnement à substance dilatable (58) et pour comprimer cet élément (58) à l'état désactivé.

6. Soupape thermostatique selon la revendication 1, **caractérisée en ce que**
l'un au moins des actionneurs comporte un moteur électrique (80).

7. Soupape thermostatique selon la revendication 1, **caractérisée en ce que**
l'un au moins des actionneurs comporte un solénoïde (82).
